**Europäisches Patentamt**

**European Patent Office**

**Office européen des brevets**

(19)

(11) Veröffentlichungsnummer: **0 224 049**
**B1**

(12) **EUROPÄISCHE PATENTSCHRIFT**

(45) Veröffentlichungstag der Patentschrift:
**13.12.89**

(51) Int. Cl.⁴: **H02P 6/02**

(21) Anmeldenummer: **86114831.0**

(22) Anmeldetag: **24.10.86**

(54) **Verfahren und Schaltungsanordnung zur Erzeugung von Drehzahl-Informationen in einer Steuerschaltung eines bürstenlosen Gleichstrommotors zu seiner Regelung mittels einer digitalen Steuereinrichtung.**

(30) Priorität: **14.11.85 DE 3540396**

(43) Veröffentlichungstag der Anmeldung:
**03.06.87 Patentblatt 87/23**

(45) Bekanntmachung des Hinweises auf die Patenterteilung:
**13.12.89 Patentblatt 89/50**

(84) Benannte Vertragsstaaten:
**AT BE CH DE ES FR GB GR IT LI LU NL SE**

(56) Entgegenhaltungen:
**EP-A- 0 061 824**
**EP-A- 0 142 837**
**DE-A- 2 533 187**
**US-A- 3 924 166**

(73) Patentinhaber: **Deutsche Thomson-Brandt GmbH,
Hermann-Schwer-Strasse 3 Postfach 1307,
D-7730 Villingen-Schwenningen(DE)**

(72) Erfinder: **Morizot, Gerard, Kopsbühl 56,
D-7730 Villingen-Schwenningen(DE)**

## Beschreibung

Die Erfindung betrifft ein Drehzahlsteuerungssystem für einen bürstenlosen Gleichstrommotor unter Verwendung einer digitalen Servoschleife, nämlich ein wirtschaftliches und einfaches Mittel zur Erzeugung von Informationen bzgl. der Drehzahl mit Präzision und dabei leicht konvertierbar in digitale Worte, die von einem Mikroprozessor verarbeitet werden können oder von verdrahteten Baugruppen von normalen digitalen Schaltkreisen wie Zähler, Tore, Addierer und Subtraktoren, Flip-Flops, Multiplizierer (wie arithmetische und logische Einheiten), Speicher usw.

Die vorliegende Erfindung ist anwendbar auf bürstenlose Motore dieses Typs, deren Drehzahl höher als 10 U/min. ist, wie solche für den Antrieb von Plattentellern für normale und digitale Schallplattenspieler, Ton- oder Videoband-Recorder verwendet werden.

Bekanntlich können Geschwindigkeitssteuersysteme für bürstenlose Gleichstrommotore eine Vielzahl von Einrichtungen benutzen, um die Drehzahlinformation ihrer Welle zu liefern, wie z.B. eine Lichtschranke mit einer Quelle für IR-Strahlung, die ein dünnes achsiales Lichtstrahlbündel angibt, mit einem Detektor für derartige Strahlung, der so angeordnet ist, daß er das Strahlbündel entweder direkt oder nach Reflexion durch einen Spiegel empfangen kann, und mit einem Drehglied, das in den Pfad des Lichtstrahlbündels ragt und so die Übertragung zum Detektor beeinflußt. Das Drehglied kann als eine an der Motorwelle befestigte Scheibe mit einem Loch ausgeführt werden, welches den Lichtstrahl einmal pro Drehung der Achse auf den Detektor lenkt. Dieser kann ein Phototransistor oder eine Photodiode sein, die dann einen Impuls pro Umdrehung abgibt. Die Scheibe kann durch einen sich drehenden Finger ersetzt werden, der den Lichtstrahl jeweils einmal pro Umdrehung der Welle unterbricht. Eine andere Möglichkeit zur Anwendung einer Lichtschranke ist die Anbringung eines sich drehenden Spiegels an einem von der Welle angetriebenen Teil und die Anordnung von Lichtquelle und Detektor in der Weise, daß der Lichtstrahl einmal pro Umdrehung die Detektoroberfläche trifft. Das Zeitintervall zwischen dem Beginn oder Ende zweier aufeinanderfolgender Impulse, die der Detektor liefert, kann gemessen und das Ergebnis dieser Messung mit einem gespeicherten digitalen Wert verglichen werden. Der Differenzbetrag wird als Fehlersignal in einer Regelschleife verwendet, wodurch die Antriebsspannung, die an den Statorwindungen liegt, variiert wird, um den Differenzbetrag zu minimieren.

Ein anderer bekannter Weg zu Erzeugung eines eine Drehzahlinformation einer Motorachse enthaltenden Signals besteht aus der Anwendung eines Tacho-Generators des Typs, der einen peripheren Ringmagneten aufweist, der vorzugsweise den Permanentmagnetrotor umgibt, und der eine Anzahl von Polen besitzt, die ein Vielfaches der Rotorpolzahl ist und eine kreis- oder ringförmige, mäanderartige Wicklung aufweist, die dem äußeren Ringteil gegenübersteht und auf dem Substrat einer gedruckten Schaltung aufgebracht ist. Das in dieser Tacho-Wicklung induzierte Signal besitzt eine der Motordrehzahl proportionale Amplitude und Frequenz. Die Frequenz dieses Signals kann dazu benutzt werden, um einen digitalen Wert abzuleiten, der in der Steuerschleife verwendet wird.

Die beiden zuvor erwähnten Mittel zur Erzeugung einer Drehzahlinformation machen zusätzliche mechanische, opto-elektrische oder magnetische Bauteile notwendig und das zweite hat eine Vergrößerung der Höhe des axialen Luftspalts zwischen dem Permanentmagnetrotor und den Stator-Antriebsspulen zur Folge. Das verursacht eine Verringerung des Motordrehmoments. Darüberhinaus ist die induzierte Signalamplitude in der Mäander-Wicklung relativ klein (in der Größenordnung von 5 mV) und muß deshalb verstärkt, gefiltert und begrenzt (abgekappt) werden, um ein brauchbares Rechtecksignal für digitale Schaltkreise oder Mikroprozessoren zu erhalten. Das alles führt zu einer Verteuerung. Eine Schaltung, die die Ausgangsspannung eines Tachogenerators verwendet, wird in Figur 9 der US-PS 4 394 594 oder der GB-PS 1 563 228 oder der entsprechenden DE-OS 2 533 187 gezeigt.

Ein anderes Verfahren zur Drehzahlsteuerung für einen bürstenlosen Gleichstrommotor mit Permanentmagnetrotor wurde in der US-PS 3 924 166 oder der FR-Patentanmeldung Nr. 2 204 073 entsprechend der DE-OS P 2 251 292 (Figur 1) beschrieben. Nach diesem Verfahren wird die Gegen-EMK verwendet, die in den Antriebsspulen, aus denen die Statorwicklungen bestehen, induziert werden während die Schalttransistoren, die sie an die Gleichstromquelle anschließen, abgeschaltet sind. Diese Gegen-EMK besitzt eine entgegengesetzte Polarität bezogen auf die Spannung an der Wicklung solange die Transistoren durchgeschaltet sind und hat Halb-Sinuswellen-Form mit einer der Motordrehzahl proportionale Amplitude. Die Gegen-EMKe aller Wicklungen werden über entsprechende Halbwellen-Gleichrichter-Dioden einem Addier-Netzwerk zugeführt, das aus veränderlichen Widerständen besteht und der resultierende Strom aus dieser matrix-artigen Addition wird zusammen mit einem Strom aus einer Konstantstrom-Quelle an den invertierenden Eingang eines Operationsverstärkers geführt, dessen anderer, nicht invertierender Eingang mit einem Anschluß einer Referenzspannungs-Quelle verbunden ist, die einen der gewünschten Drehzahl entsprechenden Strom liefert. Der Ausgang des Operationsverstärkers ist mit der Eingangselektrode einer steuerbaren Konstantstrom-Quelle verbunden, die zwischen einem Anschluß der Spannungsversorgungs-Quelle und dem Verbindungspunkt aller Emitter der Schalttransistoren liegt, deren Kollektorbürde die Stator-Wicklungen sind. Diese Steuerschleife, die die analoge Information aus der Gegen-EMK verwendet, die in allen Wicklungen erzeugt werden, funktioniert in der Weise, daß sie die an den Wicklungen liegende Spannung verändert, wenn ihre entsprechenden Serien-Transistoren durchgeschaltet sind, wobei die Motor-Drehzahl geregelt wird. Insbesondere bei der Verwendung zur Drehzahlsteuerung von Direct-Drive-Motoren für Analogplattenspieler mit z.B. 33 1/3 U/min. ist die notwendige Filterung des Steuersignals wegen der Brummüberlagerung (ripple) sehr aufwendig.

Nach der vorliegenden Erfindung soll die Zeit- oder Frequenzinformation in der Gegen-EMK ausgenutzt werden, die in den Wicklungen durch die Drehung des Permanentmagnetrotors induziert wird. Das ist die zugrunde liegende Aufgabe. Diese Information kann leicht in einen digitalen Wert verwandelt werden, der direkt von einem Mikroprozessor verarbeitet werden kann. Es ist leicht zu erkennen, daß die Dauer der Halbwelle der sinusartigen Gegen-EMK-Wellenform in direkter Beziehung zur Drehzahl des Rotors steht, wobei die Abstände gleichgerichteter Flanken, also ansteigender bzw. abfallender, ein zeitliches Fenstersignal liefern. Der Vorteil der Schaltung gemäß der Schaltung gemäß der vorliegenden Erfindung gegenüber dem Stand der Technik, insbesondere zu der erwähnten analogen Servo-Schleife, die ebenfalls die Gegen-EMK verwertet, ist in der Einfachheit und den niedrigen Kosten zu sehen, da der Mikroprozessor üblicherweise vorhanden ist in Apparaten mit einem Motor und auch zur Ausführung anderer Funktionen ausgenutzt wird. Darüber hinaus verwendet die Schaltung keine Teile, die justiert werden müssen, wie Potentiometer oder präzise geregelte Spannungen für ihren Betrieb.

Die Erfindung wird praktisch angewendet durch ein Verfahren gemäß Anspruch 1 und gemäß der Schaltungsanordnung nach Anspruch 2.

Die Erfindung wird besser verstanden und andere Eigenschaften und Vorteile werden von der nachfolgenden Beschreibung und den Zeichnungen deutlich werden. Diese sind:

Figur 1 ein Prinzipschaltbild eines Teiles einer Antriebsschaltung für einen bürstenlosen Gleichstrommotor; gezeigt wird das Verfahren und die Schaltungsanordnung für die Erzeugung der Drehzahlinformation gemäß der Erfindung;

Figuren 2A und 2B sind Diagramme der Spannunswellenform an einer der Motorwicklungen (W2) und am Eingang (7) der Geschwindigkeitsinformation des Mikroprozessors. Der Eingang (7) ist üblicherweise der Unterbrechungs-Eingang (Interrupt) des Mikroprozessors.

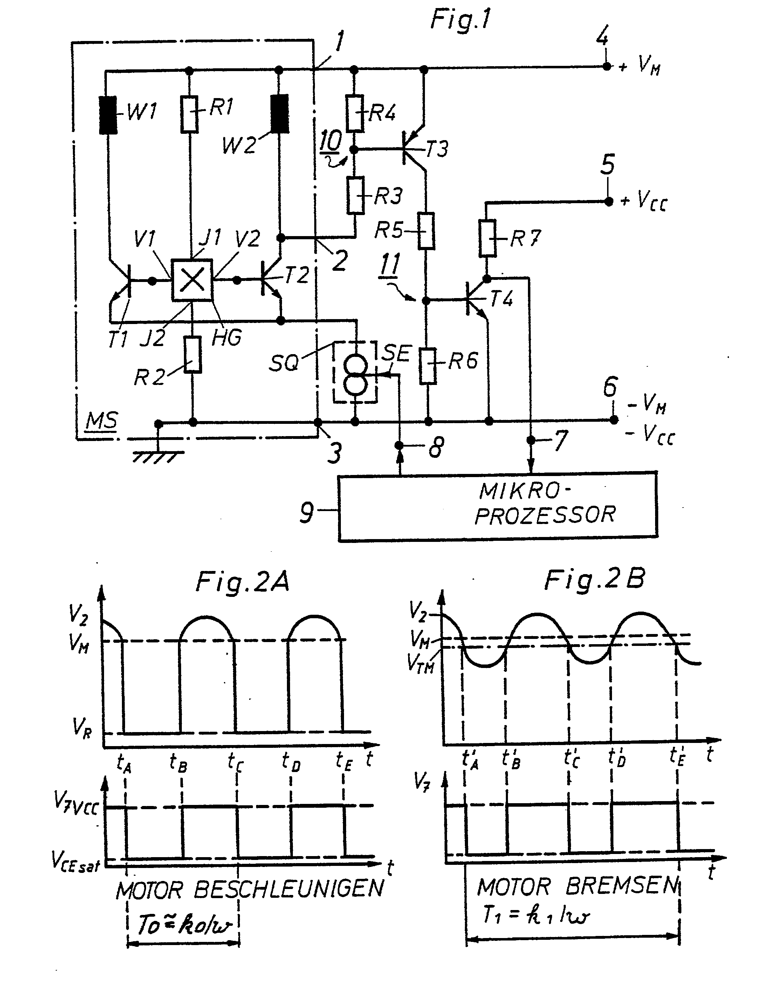

In Figur 1 enthält der bürstenlose Gleichstrommotor mit einem Permanentmagnetrotor eine Statorwicklungs-Schaltung MS mit zwei Wicklungen W1 und W2, von welchen jeweils ein Anschluß mit dem positiven Versorgungsspannungs-Anschlußpunkt 1 verbunden ist. Der andere Anschluß der Wicklungen W1 und W2 ist mit den Kollektoren der Schalttransistoren T1 beziehungsweise T2 verbunden. Die beiden Wicklungen W1 und W2 sind so in Bezug auf den Permanentmagnetrotor, der eine Vielzahl von abwechselnd orientierten magnetischen Polen (N, S- nicht gezeigt) hat, ausgerichtet, daß dann, wenn ein Pol mit einer gegebenen Polarität mit seinem Mittelpunkt der Wicklung W1 gegenübersteht, das Zentrum der anderen Wicklung W2 einem Pol mit entgegengesetzter Polarität gegenübersteht. Ein Hall-Generator HG bekannter Konstruktion ist in der Trajektorie der Magnetpole des Rotors angeordnet, so daß die magnetische Induktion B normal ist zu dem ihn durchfließenden Strom. Dieser Strom wird erzeugt, indem an den ersten Anschlußpunkt I1 des Hall-Generators HG über einen Widerstand R1 mit dem positiven Versorgungsspannungsanschlußpunkt 1 und an den zweiten Anschlußpunkt I2 über einen zweiten Widerstand R2 mit dem negativen Versorgungsspannungsanschlußpunkt 3 (Masse) angeschlossen wird.

Der Hall-Generator HG hat zwei Spannungsausgänge V1 und V2, die mit den Basen der beiden Schalttransistoren T1 respektive T2 verbunden sind und ihnen Vorspannungen zuführen, deren Änderungen entgegengesetzte Vorzeichen besitzen, so daß diese Transistoren abwechselnd durchgeschaltet werden, abhängig von der Drehwinkelposition des Rotors. Die Emitter der Transistoren T1 und T2 sind an einem gemeinsamen Anschlußpunkt angeschlossen, der an einen der Anschlüsse einer steuerbaren Stromquelle SQ angeschlossen ist. Der andere Anschluß der Stromquelle SQ ist mit dem negativen Versorgungsanschluß 3 verbunden, dagegen ihr Steuereingang SE mit einem Ausgang 8, der ein digitales Steuersignal abgibt.

Der positive Versorgungseingang 1 der Schaltung MS ist mit dem positiven Anschlußpunkt 4 (+ $V_M$) der Motorspannungsversorgung verbunden und der negative Versorgungseingang 3 ist mit dem negativen Anschluß (– $V_M$) desselben über einen gemeinsamen Masse-Anschluß 6 verbunden. Die Verbindung der zweiten Wicklung W2 mit dem Kollektor des zweiten Transistors T2 ist an einem Ausgang 2 angeschlossen, der die Spannung an der Wicklung W2 abgibt. Die Diagramme der Wellenformen dieser Spannung V2 sind in den oberen Diagrammen der Figuren 2A und 2B gezeigt und zwar für zwei Betriebsarten des Motors, nämlich Beschleunigung, zum Beispiel beim Anlaufen, und Abbremsen, in Abhängigkeit von der Motordrehzahl.

Das obere Diagramm der Figur 2A zeigt, daß, wenn der Transistor T2 durchgeschaltet ist zum Zeitpunkt $t_A$, die Spannung V2 auf den Restwert $V_R$ fällt, der von dem von der Stromquelle SQ gelieferten Strom abhängt. Dieser ist gesteuert vom Fehlersignal in Abhängigkeit von der Differenz zwischen der tatsächlichen Motordrehzahl und der gewünschten (Sollwert). Je kleiner das Fehlersignal ist, das aus dem Vergleich zwischen den elektrischen oder digitalen Werten resultiert, beziehungsweise entsprechend der gemessenen tatsächlichen Drehzahl und der gewünschten ist, um so kleiner wird der Strom, der durch die Wicklung und durch den durchgeschalteten Transistor und die Stromquelle SQ in Reihe fließt.

Die Spannung V2 wird über einen Widerstand-Spannungsteiler bestehend aus den beiden in Reihe verbundenen Widerständen R3 und R4, die parallel zur Wicklung W2 liegen, über deren Verbindungspunkt verbundenen Basis eines dritten Transistors T3 zugeführt. Der Transistor T3 ist komplementär zu den beiden Schalttransistoren T1 und T2. In der

gegenwärtigen Ausführung der Motorantriebsschaltung MS sind die Transistoren T1 und T2 vom NPN-Typ und der Transistor T3 vom PNP-Typ. Sein Emitter ist mit dem positiven Versorgungseingang 1 (resp. 4 entspr. +V$_M$) verbunden, seine Basis liegt am Spannungsteiler 10, wie erwähnt, der aus der Reihenschaltung der Widerstände R3 und R4 besteht, und sein Kollektor ist durch einen zweiten Spannungsteiler 11 bestehend aus zwei in Reihe geschalteten Widerständen R5 und R6 an den negativen Versorgungs-Eingang 3 (entspr. 6) angeschlossen.

Somit arbeitet der dritte Transistor T3 des PNP-Typs in Emitter-Schaltung und liefert an seinem Kollektor in Abhängigkeit von einem vorbestimmten Teil der Wellenform V2 der Figur 2A ein Rechtecksignal, das zwischen den Pegeln Null und +V$_M$ variiert, welches zum Beispiel zu viel ist, um eine TTL- oder CMOS-Schaltung direkt anzusteuern. Der dritte Transistor T3 spielt hier die Rolle eines Schwellwert-Detektors oder Spannungsvergleic-chers, dessen Schaltpegel von seiner Emitterspannung V$_E$ = V$_M$ bestimmt wird (für V$_B$ < V$_E$ − V$_{EB}$ ist T3 leitend und für V$_B$ > V$_E$ − V$_{EB}$ ist er gesperrt, wobei V$_{EB}$ die Einsetzspannung der Emitter-Basisdiode von etwa − 0,7 Volt ist). Die Verbindungsstelle der beiden Widerstände R5 und R6, die den zweiten Spannungsteiler 11 bilden, gibt eine rechteckige Spannung mit viel kleinerer Amplitude, und wenn das Teilerverhältnis des Spannungsteilers 11 so gewählt wurde, daß die Amplitude 5 Volt ist, könnte diese Spannung direkt an den Eingang einer Logikschaltung, wie ein Zähler-Teiler oder einen Mikroprozessor geführt werden. Es ist jedoch vorteilhaft einen vierten Transistor T4 zu verwenden, der von dem NPN-Typ ist und als Pufferstufe oder Spannungspegelanpaßstufe dient. Die Basis des vierten Transistors T4, der in Emitter-Schaltung arbeitet, ist an die Verbindungsstelle der Widerstände R5 und R6 angeschlossen und sein Emitter ist mit dem negativen Anschlußpunkt -V$_{cc}$ einer Niederspannungs-Gleichstrom-Versorgung verbunden, die mit dem Logik-Pegel, wie er in Digital-Schaltungen verwendet wird, kompatibel ist. Dieser negative Anschlußpunkt -V$_{cc}$ ist mit dem Anschluß -V$_M$ der Mo-torspannungsversorgungs-Schaltung MS verbun-den, ist in Figur 1 als Anschlußpunkt 6 eingezeichnet und bildet den negativen Versorgungsanschlußpunkt.

Der Kollektor des vierten Transistors T4 ist über einen Lastwiderstand R7 mit dem positiven An-schlußpunkt 5 (+V$_{cc}$) der Niederspannungsversor-gung verbunden und außerdem direkt mit dem Dreh-zahl-Wahrnehmungs-Eingang 7 des Mikroprozes-sors.

Der digitale Teil der Motor-Regelschleife, der als "Digital-Steuermittel" 9 bezeichnet wurde, enthält einen als Mikroprozessor ausgeführtes Signalverarbeitungs-Gerät, das an seinem Ausgang ein verstärktes digitales Fehlersignal abgibt, und ein Output-Interface (Ausgangsverbindung) hat, das den Ausgang 8 mit einem analogen Steuersignal speist, der mit dem Steuereingang SE der Stromquelle SQ verbunden ist. Das Signal am Ausgang 8 könnte z.B. ein analoges Steuersignal sein, dann ist das Output-Interface des P ein D/A-Konverter.

Die Funktionsweise der Schaltungsanordnung nach der Erfindung wird nun unter Bezug auf die bereits erwähnten Figuren 2A und 2B der Zeichnung erläutert. Wenn der Motor in der Beschleunigung-Betriebsart ist, das ist der Fall während die gemessene Drehzahl niedriger ist als die gewünschte, gibt die Stromquelle SQ, angetrieben von einem Signal, dessen Größe proportional zu der Differenz zwischen diesen Drehzahlen ist, einen hohen Antriebsstrom ab an die Wicklung W1 und W2 über ihre respektiven Schalttransistoren T1, T2.

Vor dem Zeitpunkt t$_A$ ist der Transistor T1 durchgeschaltet und der Transistor T2 gesperrt, so daß die Spannung V2 am Drehzahl-Wahrnehmungs-Ausgang 2 von der Gegen-EMK bestimmt wird, die durch die Vorbeibewegung eines der Pole des Permanentmagnetrotors an der Frontseite der Wicklung W2 von einer Begrenzung mit einem entgegengesetzt polarisierten, benachbarten Pol bis zum nächsten entsteht. Folglich hat diese Gegen-EMK die Form einer positiven Sinus-Halbwelle addiert zu der Spannung +V$_M$ am anderen Anschluß der Wicklung W2. Dadurch entsteht an der Basis des PNP-Transistors T3 eine höhere Vorspannung als seine Emitter-Spannung ist, dadurch bleibt der Transistor T3 gesperrt und seine Kollektorspannung ist auf Null-Pegel.

Das hält den vierten Transistor T4 gesperrt, so daß die Kollektorspannung V7 gleich der Spannung +V$_{cc}$ ist. Im Zeitpunkt t$_A$ passiert die Gegen-EMK die Nulllinie und der Hall-Generator HG liefert an seinem Spannungsausgang V1 einen negativen Verlauf (swing), der die Sperrung des ersten Transistors T1 steuert, und an einem zweiten Spannungsausgang V2 einen positiven Verlauf (swing) ergibt, der den Transistor T2 durchschaltet. Das bewirkt einen schnellen Übergang der Spannung V2 auf ihren Restwert V$_R$ und eine entsprechend schnelle Durchschaltung des dritten Transistors T3. Der Kollektorstrom des dritten Transistors T3 läßt die Basis des vierten Transistors T4 positiv werden, so daß er gesättigt wird und seine Kollektorspannung V7 gering wird (d.h. auf den Wert V$_{CEsat}$.).

Wenn zum Zeitpunkt T$_B$ der Hall-Generator HG Spannungsverläufe (-swings) in der umgekehrten Richtung erzeugt, d.h. wenn eine Pol-Begrenzung an der entsprechenden Wicklung vorbei passiert, dann wird der Transistor T2 gesperrt und der Transistor T1 wieder durchgeschaltet und die Transistoren T3 und T4 werden gleichzeitig gesperrt.

Dadurch wird die Spannung V$_7$ auf den Wert +V$_{cc}$ geändert. Dieser Zustand bleibt erhalten bis zum Zeitpunkt t$_C$, wenn der Hall-Generator HG wieder seinen Ausgangsspannungsverlauf (-swing) umkehrt. Die Anzahl der Perioden der rechteckigen Spannungswelle V7 (To = ko/w) hängt von der Anzahl der Rotorpolpaare ab. Im vorliegenden Beispiel, gezeigt in Figuren 2A und 2B, besitzt der Stator zwei Wicklungen und der Rotor zwei Polpaare, d.h. vier Pole, das hat zur Folge, daß je Umdrehung des Motors zwei Perioden To der rechteckigen Wel-le V$_7$ erzeugt werden. Da die Querschnittswerte jedes Pols oder die Polfläche, die von einer Magnetisierung mittels extern erzeugter Magnetfelder, die auf eine ringförmige oder zylindrische Oberfläche wirken, ungleich sein können, wird erheblich größere Präzision erreicht, wenn zwei Durchgänge (Flanken) im gleichen Sinn und entsprechend einer ganzen Rotorumdrehung benutzt werden, um ein Fenster zu erzeugen für die Messung der Drehzahl, das sind in diesem Fall zwei aufeinander folgende Perioden.

Das zuvor gesagte ist sogar von noch größerer Wichtigkeit, wenn der Motor in der Bremsbetriebsart ist, d.h., wenn die Stromquelle SQ praktisch abgeschaltet ist. In diesem Fall, der im oberen Diagramm der Figur 2B gezeigt ist, ist die einzige erzeugte Spannung an der Wicklung W2 die Gegen-EMK, die durch die Bewegung der Pole erzeugt wird. Somit resultiert die Spannung V2 aus der Überlagerung einer Sinus-Spannung, deren Frequenz und Amplitude von der Drehgeschwindigkeit des Rotors abhängt und damit von dem Potential am positiven Versorgungseingang 1(+$V_M$). Im oberen Diagramm der Figur 2B ist eine Sinuswelle dargestellt, die um einen mittleren Pegel +$V_M$ variiert, das entspricht der Emitter-Spannung des dritten Transistors T3. Da die Spannungsänderungen der Sinus-Komponente in der Nähe der Nulldurchgänge linear ist und eine von der Geschwindigkeit abhängige Steilheit hat, treffen die Zeitpunkte für das Durchschalten (t'A, t'C und t'E) und das Sperren (t'B und t'D) nicht mehr zusammen mit dem Zeitpunkt, bei welchem die Spannung V2 den $V_M$-Pegel durchquert, weil die benötigte Basis-Emitter-Vorspannung, um den Transistor T3 durchzuschalten, einige Zehntel-Volt negativ ist, d.h. $V_{BEon}$ = 0,7 Volt oder $V_{EBon}$ = 0,7 Volt. Das wurde durch die gestrichelte Linie $V_{TM}$ in Figur 2B angedeutet. Aus dem gleichen Grund sind die Zeiten (t'B− t'A, t'D− t'C) kürzer als die Sperrzeiten der beiden Transistoren T3 und T4. Deshalb ist es, um eine präzise Geschwindigkeitsmessung zu erreichen, vorzuziehen, daß ein zeitliches Fenster erzeugt wird, dessen Dauer T1 = k1/W einer ganzen Umdrehung des Rotors entspricht, dabei muß die Eingangswellenform V7 eine Frequenzteilung erleben mit einem Teilungsverhältnis entsprechend der Anzahl der Rotorpolpaare. Der Ausgang eines solchen Frequenzteilers, enthalten im Input-Interface, wird eine rechteckige Welle liefern, deren Periode 2T1 entspricht und die ein Tast- oder Fenster-Signal der Dauer T1 bei jeder zweiten Umdrehung abgibt. Dieses Fenster-Signal steuert zum Beispiel ein Koinzidenztor, dessen anderer Eingang erhält ein Taktsignal mit einer erheblich höheren Frequenz als das Fenster-Signal. Der Ausgang des Tores kann mit einem Serien- oder Taktgeber-Eingang eines Binär-Zählers verbunden sein, der zurückgesetzt (gelöscht) werden kann von der Vorderkante (-flanke) des Fenster-Signals und der die Anzahl der Taktimpulse während der Dauer des letzteren zählt. Am Ende des Fenster-Impulses liefern die parallelen Ausgänge des Zähler ein binäres Wort proportional zu der Drehgeschwindigkeit, das verglichen werden kann mit einem Referenzwort, das der gewünschten Drehzahl entspricht.

## Patentansprüche

1. Verfahren zur Erzeugung von Drehzahl-Information für die Steuerung der Drehzahl eines bürstenlosen Gleichstrommotors, der einen Permanentmagnetrotor hat, worin die Spannung an wenigstens einer der Statorwicklungen dazu benutzt wird, die Geschwindigkeits-Information abzugeben, wobei diese Spannung an einen Schwellwertdetektor (T3) gelegt wird, dessen Ausgang eine Rechteckwelle abgibt, deren Flanken den Überschreitungen eines vorbestimmten Pegels durch die Spannung entsprechen, dadurch gekennzeichnet, daß ein zeitliches Fenstersignal erzeugt wird, das eine Dauer von einer Anzahl von Perioden des Rechteckwellensignals besitzt und zwar vorzugsweise einer Anzahl, die der Rotorpolpaarzahl entspricht, und daß nach Spannungspegelanpassung mit an sich bekannten Mitteln an logische Eingangspegel von digitalen Schaltungen eine solche angesteuert wird.

2. Schaltung für die Durchführung des Verfahrens nach Anspruch 1 für die Erzeugung von Drehzahl-Informationen geeignet für die Steuerung nach Anspruch 1 der Drehzahl eines bürstenlosen Gleichstrommotors, der einen Permanentmagnetrotor mit einer Vielzahl von Polpaaren und einen Stator mit wenigstens einem Paar Wicklungen (W1, W2) aufweist, deren entsprechende erste Anschlüsse (1) mit einem ersten Versorgungseingang (4) verbunden sind und deren entsprechende zweite Anschlüsse mit dem Kollektor von zwei Schalttransistoren (T1, T2) verbunden sind, beide Basen derselben liegen respektive an zwei Spannungsausgängen eines Hallelements (HG), so daß sie alternierend ein und aus geschaltet werden, und die Emitter der genannten Transistoren (T1, T2) sind zusammen an einem Anschlußpunkt einer steuerbaren Stromquelle (SQ) angeschlossen, deren anderer Anschlußpunkt mit einem zweiten Versorgungseingang (3, 6) verbunden ist, wobei sie mit den genannten ersten und zweiten Versorgungseingängen (4 resp. 6) verbunden sind, indem eine der beiden genannten Wicklungen (W2) überbrückt wird von einem ersten Spannungsteiler (R3, R4), dadurch gekennzeichnet, daß dessen Ausgang an den Eingang eines Schwellwert-Detektors (T3) angeschlossen ist, dessen Referenzpegeleingang durch den Motorversorgungsspannungsanschluß (4) mit dem ersten Anschluß der genannten Wicklung (W2) verbunden ist und dessen Ausgang eine Rechteckwelle liefert, deren Flanken in einer oder der anderen Richtung entsprechend korrespondieren mit negativ- oder positivwerdenden Übergängen der zuvor erwähnten, vorbestimmten Pegel und über bekannte Schaltungsmittel (R5, R6, R7, T4) zur Anpassung von Spannungspegeln z.B. einen Mikroprozessor (9) über den Eingang (7) ansteuern.

## Claims

1. A method of generating rotational speed information for controlling the rotational speed of a brushless direct current motor, which has a permanent magnet rotor, in which the voltage is used in at least one of the stator windings to emit the speed information, this voltage being applied to a threshold value detector (T3), the output of which emits a rectangular wave form, the flanks of which correspond to the overshoots of a predetermined level by the voltage, characterised in that a time window signal is produced which has a duration of a number of periods of the rectangular waveform and indeed preferably a number which corresponds to the numbers of rotor pole pairs, and that after matching the voltage level using means known per se to logic input levels of digital circuits one such circuit is triggered.

2. A circuit for implementing the method according to claim 1 for generating rotational speed information suitable for controlling according to claim 1 the rotational speed of a brushless d.c. current motor, which has a permanent magnet rotor with a plurality of pole pairs and a stator with at least one pair of windings (W1, W2), their corresponding first connections 91) being connected to first supply input (4) and their corresponding second connections being connected to the collector of two switching transistors (T1, T2), both bases thereof lying respectively at two voltage outputs of a Hall element (HG), so that they are switched on and off alternately, and the emitters of the said transistors (T1, T2) are connected together at a connection point of a controllable current source (SQ), the other connection point thereof being connected to a second supply input (3, 6) so that they are connected to the said first and second supply inputs (4 and 6 respectively), one of the two said windings being bridged by a first voltage divider (R3, R4), characterised in that its output is connected to the input of a threshold value detector (T3), the reference level input of which is connected by the motor supply voltage connection (4) to the first connection of the said winding (W2) and its output delivers a rectangular waveform, the flanks of which trigger for example a microprocessor (9) via the input (7) in one or other direction accordingly corresponding to negative or positive going transitions of the previously mentioned predetermined levels and by means of known circuit means (R5, R6, R7, T4) for matching voltage levels.

## Revendications

1. Procédé destiné à générer des données de vitesse pour commader la vitesse de rotation d'un moteur à courant continu sans balais muni d'un rotor à aimant permanent, dans lequel la tension d'au moins un des enroulements du stator est utilisée pour fournir des informations de vitesse, cette tension étant appliquée à un détecteur à valeur seuil (T3) dont la sortie délivre une onde rectangulaire, ses flancs correspondent aux dépassements d'un niveau déterminé par la tension, caractérisé en ce qu'on produit un signal de fenêtre de temps ayant une durée d'un nombre de périodes du signal rectangulaire et ce, de préférence d'un nombre correspondant au nombre de paires de pôles du rotor, et qu'après une adaptation du niveau de tension au niveau d'entrée logique des circuits numériques par des moyens connus en soi, un circuit de ce genre est activé.

2. Circuit pour la mise en œuvre du procédé selon la revendication 1 destiné à générer des données de vitesse servant à commander selon la revendication 1 la vitesse de rotation d'un moteur à courant continu sans balais comportant un rotor à aimant permanent ayant plusieurs paires de pôles, et un stator muni d'au moins une paire d'enroulements (W1, W2) dont les premières bornes correspondantes (1) sont reliées à une première entrée d'alimentation (4) et dont les deuxièmes bornes correspondantes sont reliées au collecteur de deux transistors (T1, T2), les deux bases de ces derniers étant appliquées respectivement aux deux sorties de tension d'un élément à effet Hall (HG), de sorte qu'elles sont rendues alternativement à l'état passant et bloqué, et les émetteurs de ces transistors (T1, T2) sont reliés ensemble à un point de raccordement d'une source de courant contrôlable (SQ) dont l'autre point est relié à une deuxième entrée d'alimentation (3, 6), ceux-ci étant reliés aux première et deuxième entrées d'alimentation précitées par pontage de l'un des deux enroulements (W2) par un premier pont diviseur de tension (R3, R4), caractérisé en ce que sa sortie est reliée à l'entrée d'un détecteur à valeur seuil (T3) dont l'entrée à niveau de référence est reliée par la borne de tension d'alimentation du moteur (4) à la première borne de l'enroulement cité (W2), et dont la sortie délivre une onde rectangulaire, ses flancs correspondant dans l'une ou dans l'autre direction aux changements d'état devenant positif ou négatif des niveaux déterminés indiqués précédemment et qui commandent, par ex. un microprocesseur (9), par l'entrée (7) en utilisant des circuits (R5, R6, R7, T4) connus en soi pour l'adaptation des niveaux de tension.

Fig.1

Fig.2A

Fig.2B

MOTOR BESCHLEUNIGEN

$T_0 \approx k_0/\omega$

MOTOR BREMSEN

$T_1 = k_1/\omega$

MIKRO-PROZESSOR